# EUROPÄISCHE PATENTSCHRIFT

(11) **EP 1 196 643 B1**
(45) Veröffentlichungstag und Bekanntmachung des Hinweises auf die Patenterteilung: **13.08.2003**
(21) Anmeldenummer: 00936719.4
(22) Anmeldetag: 06.05.2000
(51) Int. Cl.: C21D 9/30, C21D 1/10

(54) **VERFAHREN UND VORRICHTUNG ZUM HÄRTEN DER LAGERFLÄCHEN VON KURBELWELLEN**
METHOD AND DEVICE FOR HARDENING BEARING SURFACES OF CRANKSHAFTS
PROCEDE ET DISPOSITIF DE TREMPE DES SURFACES PORTANTES DE VILEBREQUINS

(30) Priorität: 22.07.1999 DE 19934534
(43) Veröffentlichungstag der Anmeldung: 17.04.2002
(73) Patentinhaber: ELOTHERM GmbH, 42897 Remscheid (DE)
(72) Erfinder: SCHULTE, Peter, D-42119 Wuppertal (DE); LEISSNER, Hans-Jürgen, D-42855 Remscheid (DE); GEZARZICK, Waldemar, D-42857 Remscheid (DE)
(74) Vertreter: Simons, Johannes, Dipl.-Ing.
(86) Internationale Anmeldenummer: EP0004077
(87) Internationale Veröffentlichungsnummer: WO01007668

(56) Entgegenhaltungen:
- DE-A- 2 703 750
- DE-B- 1 174 348
- US-A- 3 944 446
- PATENT ABSTRACTS OF JAPAN vol. 013, no. 414 (C-635), 13. September 1989 (1989-09-13) & JP 01 152221 A (HONDA MOTOR CO LTD), 14. Juni 1989 (1989-06-14)
- PATENT ABSTRACTS OF JAPAN vol. 012, no. 022 (C-470), 22. Januar 1988 (1988-01-22) & JP 62 174329 A (HONDA MOTOR CO LTD), 31. Juli 1987 (1987-07-31)

## Beschreibung

Die Erfindung betrifft ein Verfahren zum Härten der Lagerflächen einer Welle oder Achse, insbesondere einer Kurbelwelle oder Nockenwelle. Darüber hinaus betrifft die Erfindung eine Vorrichtung zum Härten der Lagerflächen von während des Härtens um ihre Längsachse umlaufenden Wellen oder Achsen, insbesondere von Kurbelwellen oder Nockenwellen.

Besonders beim Härten der Lagerflächen von Kurbelwellen besteht das Problem, daß sich die Kurbelwelle aufgrund der jeweils örtlich begrenzt einwirkenden Hitze verzieht. Besonders deutlich macht sich dieser Verzug bemerkbar, wenn ein Hauptlager der Kurbelwelle gehärtet wird.

Ein Verfahren und eine Vorrichtung der voranstehend genannten Art, welche ein verzugsminimiertes Härten von Kurbelwellen ermöglichen, sind in der DE 31 37 398 C1 vorgeschlagen worden. Bei diesem Stand der Technik wird während der induktiv erfolgenden Erwärmung der jeweiligen Lagerfläche der sich einstellende Verzug erfaßt. Dazu ist eine Meßeinrichtung vorgesehen, die den Hub des an der Lagerfläche anliegenden, pendelnd gelagerten Induktors während des Umlaufens der Kurbelwelle überwacht. Stellt sich'eine Vergrößerung des Hubes ein, so wird die Heizleistung des Induktors erhöht. Wird dagegen eine Verringerung des Hubes festgestellt, so wird auch die Heizleistung vermindert. Gleichzeitig ist die Kurbelwellebeidseitig des zu härtenden Lagers in jeweils einer Lünette eingespannt. Diese Stützeinrichtungen umfassen drei in regelmäßigen Winkelabständen auf der Kurbelwelle sitzende Rollen, über welche die jeweilige Stützkraft auf die Kurbelwelle ausgeübt wird. Durch das Zusammenwirken der von den Lünetten ausgeübten Stützkräfte und der veränderlichen Heizleistung wird erreicht, daß der mit dem Härten einhergehende Verzug der Kurbelwelle auf ein Minimum reduziert ist.

In der Praxis hat sich herausgestellt, daß insbesondere dann, wenn die Flächen der Hub- und Hauptlager einer Kurbelwelle nacheinander gehärtet werden, die mit dem bekannten Verfahren bzw. mit der bekannten Vorrichtung erreichte Minimierung des Verzugs nicht ausreicht, um den gesteigerten Anforderungen an die Maßhaltigkeit derart gehärteter Wellen gerecht zu werden.

Ausgehend von dieser Problematik besteht die Aufgabe der Erfindung darin, ein Verfahren und eine Vorrichtung der voranstehend erläuterten Art zu schaffen, bei denen der sich mit dem Härten von Lagerflächen einstellende Verzug einer Welle oder Achse weiter vermindert ist.

Die JP-A-62 174 329 beschreibt ein an das Härten der Lagerflächen einer Kurbelwelle anschließendes Richten mittels die Lagerfläche beidseitig umfassender Preßbacken.

Zum einen wird die genannte Aufgabe durch ein Verfahren zum Härten der Lagerflächen einer Welle oder Achse, insbesondere einer Kurbelwelle oder Nockenwelle, gelöst, bei dem die zu härtenden Lagerflächen bei um ihre Längsachse umlaufender Welle oder Achse nacheinander mittels einer Erwärmungs- und Abschreckeinrichtung gehärtet werden, bei dem der sich im Zuge des Härtens im Bereich der jeweiligen Lagerfläche einstellende Verzug der Welle oder Achse ermittelt wird, bei dem die Welle oder Achse während des Härtens einer Lagerfläche durch mindestens eine Stützeinrichtung abgestützt wird, die an eine zuvor gehärtete Lagerfläche angesetzt wird, und bei dem die Stellung der Stützeinrichtung unter Berücksichtigung des Verzuges geregelt wird, der für die Lagerfläche erfaßt worden ist, an welcher die Stützeinrichtung angesetzt ist.

Zum anderen wird die voranstehend genannte Aufgabe durch eine Vorrichtung zum Härten der Lagerflächen von während des Härtens um ihre Längsachse umlaufenden Wellen oder Achsen, insbesondere von Kurbelwellen oder Nockenwellen, gelöst, die mit einer Erwärmungs- und Abschreckeinrichtung, mit einer Stützeinrichtung'zum Abstützen der Welle oder Achse während des Härtens der Lagerflächen und mit einer Einrichtung zum Ermitteln des Verzuges der jeweiligen Welle oder Achse ausgestattet ist, wobei eine Steuereinrichtung mit einem Speicher zum Speichern des Ergebnisses der Ermittlung des Verzuges vorhanden ist und die Stützeinrichtung eine mit der Steuereinrichtung verbundene Stelleinrichtung umfaßt, welche die Stellung der Stützeinrichtung unter Berücksichtigung der gespeicherten Meßwerte verändert.

Der Erfindung liegt der Gedanke zugrunde, daß der sich beim Härten einer Lagerfläche einstellende Verzug auch dann berücksichtigt wird, wenn an der betreffenden Lagerstelle eine Stützeinrichtung angesetzt wird, um die Welle oder Achse während der Härtung der nächstfolgend bearbeiteten Lagerfläche zu stützen. Die Stelleinrichtung wird damit in Abhängigkeit des jeweils im Bereich der Stützstelle vorhandenen Verzugs der Welle oder Achse geführt. Auf diese Weise können die von der Stützeinrichtung aufgebrachten Stützkräfte den tatsächlichen Gegebenheiten ängepaßt werden.

Dies ermöglicht es einerseits, die auf die Welle oder Achse einwirkenden Stützkräfte so anzupassen, daß ungewollte zusätzliche Verformungen der Welle oder Achse vermieden werden. Diese können andernfalls aufgrund der nicht an die tatsächlichen Gegebenheiten angepaßten Bewegungen der Stützeinrichtungen verursacht werden. Andererseits können durch eine entsprechende Regelung der Stellung der Stützeinrichtung gezielt Stützkräfte auf die Welle oder Achse aufgebracht werden, um eine zum Ausgleich des Verzugs geeignete Verformung der Welle oder Achse zu erhalten.

Dabei erfolgt die Regelung der Stellung der Stützeinrichtung in Abhängigkeit von der Drehstellung der während des Härtens um ihre Längsachse umlaufenden Welle oder Achse. Die Erfindung ermöglicht so die auf die drehwinkelabhängige Steuerung der Abstützung der bearbeiteten Welle oder Achse unter gleichzeitigem Ausgleich derjenigen Verformungen, welche sich aufgrund der vorhergehenden, an anderer Stelle vorgenommenen Härtungen einstellen. Im Ergebnis führt die erfindungsgemäße Berücksichtigung der sich während des Härtens der Lagerflächen einer Welle oder Achse einstellenden Verformungen dazu, daß nach Abschluß der Härtungen aller Lagerflächen die Welle oder Achse einen auf ein Minimum reduzierten Verzug aufweist.

Der bei der Regelung der Stellung der Stützeinrichtung berücksichtigte jeweilige Verzug der einzelnen Lagerstellen läßt sich dadurch ermitteln, daß der sich beim Härten der Lagerflächen jeweils einstellende Verzug an einer Musterwelle oder Musterachse erfaßt wird und während des Härtens der anschließend bearbeiteten Wellen oder Achsen die Stellung der Stützeinrichtung, die an eine jeweils zuvor gehärtete Lagerfläche der bearbeiteten Wellen oder Achsen angesetzt ist, unter Berücksichtigung des Verzuges geregelt wird, welcher an der Musterwelle für die jeweils entsprechende Lagerfläche ermittelt worden ist. Bei dieser Ausgestaltung der Erfindung wird davon ausgegangen, daß sich beim Härten der Lagerstellen von Wellen oder Achsen einer großen Serie von Werkstücken mit identischer Geometrie stets derselbe Verzug einstellt. Daher wird an einem Musterstück der sich beim Härten jeder Lagerstelle einstellende Verzug ermittelt. Der einmal so ermittelte Verzug wird bei Regelung der Stellung der Stützeinrichtung während des Härtens aller anschließend bearbeiteten Wellen oder Achsen derselben Serie berücksichtigt. Auf diese Weise kann der Aufwand für die Ermittlung des Verzuges minimiert werden.

Eine Verbesserung der Genauigkeit des Ausgleichs des sich einstellenden Verzuges kann dadurch erzielt werden, daß sich der während des Härtens einer Lagerfläche (H1) jeweils einstellende Verzug ermittelt wird, daß nach Fertigstellung des Härtens der Lagerfläche die Stützeinrichtung an diese gehärtete Lagerfläche angesetzt wird, um die Welle oder Achse während des Härtens der nächsten Lagerfläche zu stützen, und daß die Stellung der Stützeinrichtung unter Berücksichtigung des Verzuges geregelt wird, welcher für die gehärtete Lagerstelle ermittelt worden ist. Bei dieser Ausgestaltung der Erfindung wird für jede Welle oder Achse der sich jeweils an den einzelnen Lagerflächen tatsächlich einstellende Verzug erfaßt. Dieser Verzug wird dann bei der Abstützung der Welle oder Achse während des Härtens der nachfolgend bearbeiteten Lagerfläche berücksichtigt. Auf diese Weise werden alle mit dem Härten einhergehenden Verformungen der Welle oder Achse unter Berücksichtigung der für jedes einzelne Werkstück gegebenen tatsächlichen Verhältnisse unmittelbar ausgeglichen.

Unabhängig davon, in welcher Weise der Verzug ermittelt wird, sollte der Verzug hinsichtlich seiner Größe und seiner Winkellage erfaßt werden, um auf einfache Weise die erfindungsgemäße drehwinkelabhängige Steuerung der von der Stützeinrichtung aufgebrachten Stüfzkräfte verwirklichen zu können.

Grundsätzlich kann der Verzug nach jedem Härtevorgang manuell mit Hilfe geeigneter Meßeinrichtungen ermittelt werden. Günstig für einen automatisierten Betrieb ist jedoch die automatische Erfassung dieser Verformung der bearbeiteten Welle oder Achse.

Eine kostengünstig herstellbare und unter Berücksichtigung der Raumverhältnisse vorteilhafte Ausgestaltung der Erfindung ist dadurch gekennzeichnet, daß die Meßeinrichtung mit der Erwärmungs- und Abschreckeinrichtung verkoppelt ist und eine Änderung des von der Erwärmungs- und Abschreckeinrichtung bei einem Umlauf der Welle oder Achse zurückgelegten Wegs als Maß für den Verzug der Welle oder Achse erfaßt wird. Selbstverständlich können auch eigenständige, von der Erwärmungs- und Abschreckeinrichtung unabhängige Meßeinrichtungen eingesetzt werden, wie beispielsweise optische, elektrische oder sonstige Meßsysteme, weiche zur Erfassung der Veränderung einer geometrischen Form oder Lage geeignet sind.

Besonders vorteilhaft-läßt sich die Erfindung im Zusammenhang mit solchen Vorrichtungen nutzen, bei denen die Erwärmungs- und Abschreckeinrichtung eine induktiv arbeitende Erwärmungseinheit umfaßt. Gerade derartige induktiv arbeitende Erwärmungseinheiteri ermöglichen eine präzise Wärmebeeinflussung des jeweils bearbeiteten Werkstücks.

Vorteilhaft ist es, wenn die Stelleinrichtung in mindestens zwei Freiheitsgraden bewegbar ist. Dies ermöglicht es, jede Verformung der Welle oder Achse durch eine entsprechende Stellung der Stelleinrichtung auszugleichen. Dabei läßt sich die Verstellbarkeit der Stelleinrichtung auf einfache Weise dadurch realisieren, daß die Stelleinrichtung eine hydraulisch, pneumatisch oder elektrisch betätigbare Krafterzeugungseinrichtung umfaßt. Umfaßt diese Krafterzeugungseinrichtung einen Zylinder, so ist es im Hinblick auf eine Reduzierung des Raumbedarfs günstig, wenn eine Verrängerung des Kolbens des Zylinders eine Stütze bildet, auf der die Welle oder Achse abgestützt ist. Eine derart ausgebildete Stützeinrichtung weist eine kompakte Bauform auf, die sich auch bei beengten Platzverhältnissen einfach montieren läßt.

Um eine sichere Abstützung der während des Härtens um ihre Längsachse rotierenden Welle oder Achse zu ermöglichen, sollte die Stützeinrichtung eine Rollenlagerung für die Welle oder Achse aufweisen, wobei die Rollenlagerung zweckmäßigerweise zwei Rollen aufweist, deren Drehachsen in einer gemeinsamen Ebene gelagert sind. Diese Rollen bilden eine Zweipunktlagerung, auf der die jeweilige Lagerfläche sicher gestützt ist, wenn der Abstand der Rollen kleiner als der Durchmesser der Welle oder Achse im Bereich der Lagerfläche ist, an der die Stützeinrichtung ansetzt. Günstig ist es in diesem Zusammenhang darüber hinaus, wenn eine dritte Rolle vorgesehen ist, welche beabstandet zu den beiden anderen Rollen auf die Lagerfläche wirkt. Auf diese Weise kann die Stützstelle von den Rollen der Stützeinrichtung umgriffen werden, so daß eine den gesamten Umfang der jeweiligen Stützstelle erfassende Abstützung gewährleistet ist.

Letzteres ist insbesondere dann zweckmäßig, wenn durch die Stützkräfte eine zusätzliche, den vorhandenen Verzug der Welle oder Achse ausgleichende Stützkraft auf die Welle oder Achse aufgebracht werden soll. Eine zu diesem Zweck besonders geeignete Ausgestaltung einer erfindungsgemäßen Vorrichtung ist dadurch gekennzeichnet, daß mindestens eine der Rollen gelenkig gelagert ist und mit einer Stelleinrichtung verkoppelt ist, über welche die gelenkig gelagerte Rolle in ihre Stützstellung schwenkbar ist. Eine derart ausgebildete Stützeinrichtung kann in Bezug auf die erwünschte Verformung der Welle oder Achse sowohl negativ als auch positiv ausgerichtete Stützkräfte aufbringen.

Nachfolgend wird die Erfindung anhand einer ein Ausführungsbeispiel darstellenden Zeichnung näher erläutert. Es zeigen schematisch:

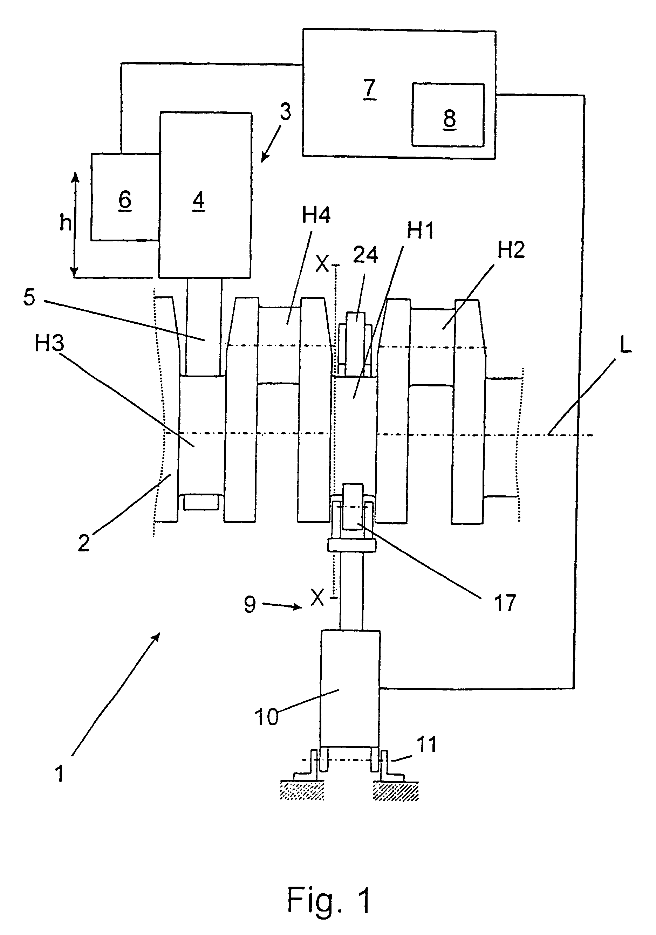

- Fig. 1: eine Vorrichtung zum Härten einer Kurbelwelle in einem Ausschnitt in einer seitlichen Ansicht;

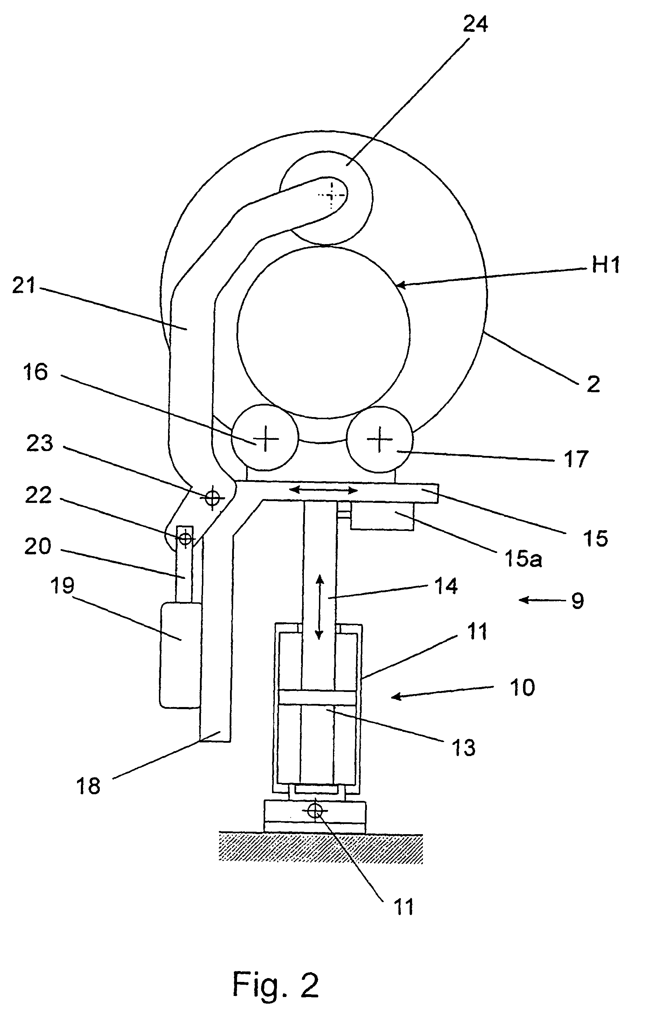

- Fig. 2: die Vorrichtung gemäß Fig. 1 in einem Schnitt entlang der in Fig. 1 angegebenen Linie X-X.

Die Vorrichtung 1 zum Härten einer in einer nicht gezeigten Spanneinrichtung gehaltenen Kurbelwelle 2 umfaßt eine Erwärmungs- und Abschreckeinrichtung 3. Diese Erwärmungs- und Abschreckeinrichtung 3 weist einen Transformator 4 und einen von dem Transformator gespeisten Induktor 5 auf. Zusätzlich ist im Bereich des Induktors 5 eine hier nicht gezeigte Brause vorgesehen, über welche eine Abschreckflüssigkeit auf die Kurbelwelle 2 gesprüht werden kann.

Der Induktor 5 umgreift mit seinen nicht gezeigten Induktorästen die jeweils zu härtende Lagerfläche halbschalenförmig. Gleichzeitig ist er mit dem Transformator 4, der nicht dargestellten Brause und den ebenfalls nicht gezeigten weiteren zur Versorgung des Induktors 5 und der Brause benötigten Baueinheiten pendelnd an einem ebenso nicht gezeigten Gestell gelagert, um den Bewegungen der Kurbelwelle während des Härtens folgen zu können.

Mechanisch, magnetisch, elektrisch oder optisch mit den Bewegungen des Induktors 5 verkoppelt ist eine Meßeinrichtung 6. Die Meßeinrichtung 6 erfaßt den Verlauf der von dem Induktor 5 während eines Umlaufs der Kurbelwelle 2 um deren Längsachse L ausgeführten Hubbewegung h. Eine mit der Meßeinrichtung 6 verbundene Steuereinrichtung 7 empfängt die von der Meßeinrichtung 6 erfaßten Meßsignale und legt sie in einem Datenspeicher 8 ab.

Zusätzlich ist die Vorrichtung 1 mit einer Stützeinrichtung 9 ausgestattet. Diese Stützeinrichtung 9 umfaßt eine Stelleinrichtung 10, welche durch einen hydraulisch oder pneumatisch betätigbaren, in einer ortsfesten Lagerung 11 schwenkbar gelagerten Zylinder 12 gebildet ist. Der in Richtung der Kurbelwelle 2 linear hin- und rückstellbare Kolben 13 des Zylinders 12 ist zu einer Stützstange 14 verlängert und trägt an seinem der Kurbelwelle 2 zugeordneten freien Ende eine Platte 15. Über eine zweite ebenfalls hydraulisch oder pneumatisch betätigbare Stelleinrichtung 15a kann die Lage der Platte 15 in einer senkrecht zur Hubbewegung des Kolbens 13 ausgerichteten Richtung bewegt werden, so daß die Stellung der Stützeinrichtung 9 in Bezug auf die zu härtende Lagerfläche H1, H2, H3, H4 der Kurbelwelle 2 in zwei Freiheitsgraden verstellbar ist.

Auf der Platte 15 sind zwei Stützrollen 16,17 beabstandet zueinander gelagert. Die Drehachsen der Stützrollen 16,17 liegen dabei in einer gemeinsamen, parallel zur Platte 15 sich erstreckenden Ebene. Der Abstand der Drehachsen ist zudem kleiner als der größte Durchmesser der zu härtenden Lagerflächen H1,H2,H3,H4, der Kurbelwelle 2, so daß die jeweilige Lagerfläche H1 - H4 gleichzeitig auf den Stützrollen 16,17 aufliegt.

An eine der Längsseiten der Platte 15 ist eine rechtwinklig von der Platte abstehende Schulter 18 angeformt, welche eine als Stellzylinder ausgebildete zweite Stelleinrichtung 19 trägt. Die Kolbenstange 20 der Stelleinrichtung 19 ist mit ihrem freien Ende über ein Gelenk 22 mit einem Arm 21 verbunden.

Der Arm 21 ist über ein zweites, beabstandet zu dem ersten Gelenk 22 angeordnetes Gelenk 23 schwenkbar an der Platte 15 gelagert und trägt an seinem freien Ende eine dritte Stützrolle 24. Dabei ist die Form des Arms 21 so gebogen ausgebildet, daß die Stützrolle, 24 bei in Richtung der Kurbelwelle 2 geschwenkter Stellung des Arms 21 auf der den Rollen 16,17 gegenüberliegenden Seite der jeweiligen Lagerfläche H1 - H4 aufliegt.

Zum Härten beispielsweise der Lagerfläche H1 eines der Hublager der Kurbelwelle 2 wird die Erwärmungs- und Abschreckeinrichtung 1 abgesenkt, bis der Induktor 5 die Lagerfläche H1 mit seinen nicht gezeigten Induktorästen umgreift, über welche zur Erwärmung der betreffenden Lagerfläche H1 ein elektro-magnetisches Feld induziert wird. Anschließend wird die Kurbelwelle 2 in Drehung um ihre Längsachse L versetzt. Damit einhergehend führen der Induktor 5 und die mit ihm verbundenen Bauelemente der Erwärmungs- und Abschreckeinrichtung 3 eine oszillierende Hubbewegung h aus. Der Verlauf dieser Hubbewegung h wird von der Meßeinrichtung 6 erfaßt und im Datenspeicher 8 der Steuereinrichtung 9 gespeichert. Aus den im Laufe des Härtens sich einstellenden Veränderungen der Hubbewegung h wird der durch das Härten verursachte Verzug der Kurbelwelle 2 nach Größe und Winkellage ermittelt.

Nach Abschluß der Härtung der Lagerfläche H1 wird der Induktor 5 angehoben und zu der im nächsten Arbeitsschritt zu härtenden Lagerfläche H3 eines Hauptlagers der Kurbelwelle 2 bewegt. Gleichzeitig wird die Stützeinrichtung 9 bei weggeschwenkter Stützrolle 24 auf die zuvor gehärtete Lagerfläche H1 zugestellt, bis die Lagerfläche H1 auf den Stützrollen 16,17 sitzt. Anschließend wird die Stützrolle 24 durch Verschwenken des Arms 21 ebenfalls auf die Lagerfläche H1 gesetzt, so daß das betreffende Hublager nach Art einer DreipunktLagerung zwischen den Stützrollen 16,17 und 24 eingespannt ist.

Während des Härtens der Lagerfläche H3 stützt die Stützeinrichtung 9 die Kurbelwelle 2 an der Lagerfläche H1 ab. Dabei wird die Stellung der Stützrollen 16,17,24 und, damit einhergehend, die jeweils aufgebrachte Stützkraft über den Stellzylinder 12 der Stelleinrichtung 10 entsprechend den in der Steuereinrichtung 7 gespeicherten, den Verzug der Kurbelwelle repräsentierenden Meßergebnissen geregelt.

### BEZUGZEICHENLISTE

- 1: Vorrichtung zum Härten
- 2: Kurbelwelle
- 3: Erwärmungs- und Abschreckeinrichtung
- 4: Transformator
- 5: Induktor
- 6: Meßeinrichtung
- 7: Steuereinrichtung
- 8: Datenspeicher
- 9: Stützeinrichtung
- 10: Stelleinrichtung
- 11: Lagerung
- 12: Zylinder
- 13: Kolben
- 14: Stützstange
- 15: Platte
- 15a: zweite Stelleinrichtung
- 16,17: Stützrollen
- 18: Schulter
- 19: Stelleinrichtung
- 20: Kolbenstange der Stelleinrichtung 19
- 21: Arm
- 22: Gelenk
- 23: Gelenk
- 24: Stützrolle

- L: Längsachse
- h: Hubbewegung
- H1,H2,H3,H4: Lagerflächen

## Patentansprüche

1. Verfahren zum Härten der Lagerflächen (H1,H2,H3,H4) einer Welle oder Achse, insbesondere einer Kurbelwelle (2) oder Nockenwelle,
- bei dem die zu härtenden Lagerflächen (H1 - H4) bei um ihre Längsachse (L) umlaufender Welle oder Achse nacheinander mittels einer Erwärmungs- und Abschreckeinrichtung (3) gehärtet werden,
- bei dem der sich im Zuge des Härtens im Bereich der jeweiligen Lagerfläche (H1) einstellende Verzug der Welle oder Achse ermittelt wird,
- bei dem die Welle oder Achse während des Härtens einer Lagerfläche (H1 - H6) durch mindestens eine Stützeinrichtung (9) abgestützt wird, die an eine zuvor gehärtete Lagerfläche (H1) angesetzt wird, und
- bei dem die Stellung der Stützeinrichtung (9) unter Berücksichtigung des Verzuges geregelt wird, der für die Lagerfläche (H1) erfaßt worden ist, an welcher die Stützeinrichtung (9) angesetzt ist.

2. Verfahren nach Anspruch 1, **dadurch gekennzeichnet, daß** die Größe und die Winkellage des Verzugs erfaßt werden.

3. Verfahren nach einem der Ansprüche 1 oder 2, **dadurch gekennzeichnet,**
- **daß** der sich beim Härten der Lagerflächen jeweils einstellende Verzug an einer Musterwelle oder Musterachse erfaßt wird und
- **daß** während des Härtens der anschließend bearbeiteten Wellen oder Achsen die Stellung der Stützeinrichtung (9), die an eine jeweils zuvor gehärtete Lagerfläche (H1) der bearbeiteten Wellen oder Achsen angesetzt ist, unter Berücksichtigung des Verzuges geregelt wird, welcher an der Musterwelle für die jeweils entsprechende Lagerfläche ermittelt worden ist.

4. Verfahren nach einem der oder 2, **dadurch gekennzeichnet**,
- daβ der sich während des Härtens einer Lagerfläche (H1) jeweils einstellende Verzug ermittelt wird,
- daß nach Fertigstellung des Härtens der Lagerfläche (H1) die Stützeinrichtung an diese gehärtete Lagerfläche (H1) angesetzt wird, um die Welle oder Achse (2) während des Härtens der nächsten Lagerfläche (H3) zu stützen, und
- daß die Stellung der Stützeinrichtung unter Berücksichtigung des Verzuges geregelt wird, welcher für die gehärtete Lagerstelle (H1) ermittelt worden ist.

5. Vorrichtung zum Härten der Lagerflächen (H1 - H4) von während des Härtens um ihre Längsachse (L) umlaufenden Wellen oder Achsen, insbesondere von Kurbelwellen (2) oder Nockenwellen, mit einer Erwärmungs- und Abschreckeinrichtung (3), mit einer Stützeinrichtung (9) zum Abstützen der Welle oder Achse (2) während des Härtens der Lagerflächen (H1 - H4) und mit einer Einrichtung (6) zum Ermitteln des Verzuges der jeweiligen Welle oder Achse, **dadurch gekennzeichnet,**
- **daß** eine Steuereinrichtung (7) mit einem Speicher (8) zum Speichern des Ergebnisses der Ermittlung des Verzuges vorhanden ist und
- **daß** die Stützeinrichtung (9) eine mit der Steuereinrichtung (7) verbundene Steileinrichtung (10) umfaßt, welche die Stellung der Stützeinrichtung (9) unter Berücksichtigung der gespeicherten Meßwerte verändert.

6. Vorrichtung nach Anspruch 5, **dadurch gekennzeichnet, daß** die Einrichtung zum Erfassen des Verzuges eine automatisch arbeitende Meßeinrichtung (6) ist.

7. Vorrichtung nach Anspruch 6, **dadurch gekennzeichnet, daß** die Meßeinrichutng (6) mit der Erwarmungs- und Abschreckeinrichtung (3) verkoppelt ist und eine Änderung des von der Erwärmungs- und Abschreckeinrichtung (3) bei einem Umlauf der Kurbelwelle (2) zurückgelegten Wegs als Maß für den Verzug der Kurbelwelle (2) erfaßt.

8. Vorrichtung nach einem der Ansprüche 5 bis 7, **dadurch gekennzeichnet, daß** die Erwärmungs- und Abschreckeinrichtung (3) eine induktiv arbeitende Erwärmungseinheit (5) umfaßt.

9. Vorrichtung nach einem der Ansprüche 5 bis 8, **dadurch gekennzeichnet, daß** die Stelleinrichtung (3) in mindestens zwei Freiheitsgraden bewegbar ist.

10. Vorrichtung nach einem der Ansprüche 5 bis 9, **dadurch gekennzeichnet, daß** die Stelleinrichtung (3) eine hydraulisch, pneumatisch oder elektrisch arbeitende Krafterzeugungseinrichtung (12) umfaßt.

11. Vorrichtung nach Anspruch 10, **dadurch gekennzeichnet, daß** die Krafterzeugungseinrichtung ein hydraulisch oder pneumatisch betätigbarer Zylinder (12) ist und d a ß eine Verlängerung des Kolbens (13) des Zylinders (12) eine Stütze (14) bildet, auf der die Kurbelwelle (2) abgestützt ist.

12. Vorrichtung nach einem der Ansprüche 5 bis 11, **dadurch gekennzeichnet, daß** die Stützeinrichtung (9) eine Rollenlagerung für die Kurbelwelle (2) aufweist.

13. Vorrichtung nach Anspruch 12, **dadurch gekennzeichnet, daß** die Rollenlagerung zwei Rollen (16,17) aufweist, deren Drehachsen in einer gemeinsamen Ebene gelagert sind.

14. Vorrichtung nach Anspruch 13, **dadurch gekennzeichnet, daß** der Abstand der Rollen (16,17) kleiner als der Durchmesser der Kurbelwelle (2) im Bereich der Lagerfläche ist, an der die Stützeinrichtung (9) ansetzt.

15. Vorrichtung nach einem der Ansprüche 12 bis 14, **dadurch gekennzeichnet, daß** eine dritte Rolle (24) vorgesehen ist, welche beabstandet zu den beiden anderen Rollen (16,17) auf die Lagerfläche (H1 - H4) einwirkt.

16. Vorrichtung nach einem der Ansprüche 12 bis 15, **dadurch gekennzeichnet, daß** mindestens eine der Rollen (16,17,24) gelenkig gelagert ist und mit einer Stelleinrichtung (19) verkoppelt ist, über welche die gelenkig gelagerte Rolle (24) in ihre Stützstellung schwenkbar ist.

## Claims

1. A procedure for hardening the bearing surfaces (H1, H2, H3, H4) of a shaft or axle, in particular a crankshaft (2) or camshaft,
- in which the bearing surfaces (H1-H4) to be hardened are hardened sequentially as the shaft or axle rotates by means of a heating and quenching device (3);
- in which the distortion of the shaft or axle that arises during the course of hardening is determined in the area of the respective bearing surface (H1);
- in which the shaft or axle is supported by at least one supporting device (9) during the hardening of a bearing surface (H1-H6), which is placed against a bearing surface (H1) hardened beforehand, and
- in which the setting of the supporting device (9) is regulated taking into account the distortion determined for the bearing surface (H1) against which the supporting device (9) is placed.

2. A procedure according to claim 1, **characterized in that** the magnitude and angular position of the distortion are determined.

3. A procedure according to one of claims 1 or 2, **characterized in that**:
- the distortion that arises during the hardening of the bearing surfaces is determined using a pattern shaft or pattern axle, and that,
- while hardening the subsequently machined shafts or axles, the setting of the supporting device (9) placed against a bearing surface (H1) of the machined shafts or axles respectively hardened beforehand is regulated taking into account the distortion determined using the pattern shaft for the respectively corresponding bearing surface.

4. A procedure according to one of claims 1 or 2, **characterized in that**:
- the respective distortion that arises during the hardening of a bearing surface (H1) is determined, that,
- after the bearing surface (H1) has been hardened, the supporting device is placed against this hardened bearing surface (H1), in order to support the shaft or axle (2) while hardening the next bearing surface (H3), and that
- the setting of the supporting device is regulated taking into account the distortion determined for the hardened bearing point (H1).

5. A device for hardening the bearing surfaces (H1-H4) of shafts or axles that rotate around their longitudinal axis (L) during hardening, in particular of crankshafts (2) or camshafts, with a heating and quenching device (3), with a supporting device (9) for supporting the shaft or axle (2) during the hardening of the bearing surfaces (H1-H4), and with a device (6) for determining the distortion of the respective shaft or axle, **characterized in that**:
- a controller (7) with a memory (8) for storing the result obtained from determining the distortion is present, and that
- the supporting device (9) encompasses a setting device (10) linked with the controller (7), which changes the setting of the supporting device (9) taking into account the stored measured values.

6. A device according to claim 5, **characterized in that** the device for detecting the distortion is an automatic measuring device (6).

7. A device according to claim 6, **characterized in that** the measuring device (6) is coupled with the heating and quenching device (3), and detects a change in the path traversed by the heating and quenching device (3) during a rotation of the crankshaft (2) as a gauge for the distortion of the crankshaft (2).

8. A device according to one of claims 5 to 7, **characterized in that** the heating and quenching device (3) encompasses an inductive heating unit (5).

9. A device according to one of claims 5 to 8, **characterized in that** the setting device (3) can be moved in at least two degrees of freedom.

10. A device according to one of claims 5 to 9, **characterized in that** the setting device (3) encompasses a hydraulic, pneumatic or electric power-generating device (12).

11. A device according to claim 10, **characterized in that** the power generating device is a hydraulic or pneumatic cylinder (12), and that an extension of the piston (13) of the cylinder (12) forms a support (14) on which the crankshaft (2) is supported.

12. A device according to one of claims 5 to 11, **characterized in that** the supporting device (9) has a roller seating for the crankshaft (2).

13. A device according to claim 12, **characterized in that** he roller seating has two rollers (16, 17), whose rotational axes are situated in a shared plane.

14. A device according to claim 13, **characterized in that** the distance between the rollers (16, 17) is less than the diameter of the crankshaft (2) in the area of the bearing surface against which the supporting device (9) rests.

15. A device according to one of claims 12 to 14, **characterized in that** a third roller (24) is provided, acting on the bearing surface (H1-H4) at a distance from the other two rollers (16, 17).

16. A device according to one of claims 12 to 15, **characterized in that** at least one of the rollers (16, 17, 24) is pivoted and coupled with a setting device (19), by means of which the hinged roller (24) can be pivoted in its support setting.

## Revendications

1. Procédé pour tremper les surfaces portantes (H1, H2, H3, H4) d'un arbre ou d'un axe, plus particulièrement d'un vilebrequin (2) ou d'un arbre à cames,
- dans lequel les surfaces portantes (H1 à H4) à tremper sont trempées lors d'une rotation de l'axe ou de l'arbre autour de leur axe longitudinal (L) les unes après les autres au moyen d'un dispositif d'augmentation de la température et de trempe (3),
- dans lequel la déformation qui apparaît au cours de la trempe de l'arbre ou de l'axe dans la zone de la surface portante respective (H1) est déterminée,
- dans lequel l'arbre ou l'axe est supporté par au moins un dispositif de soutien (9) au cours de la trempe d'une surface portante (H1 à H6), dispositif qui est appliqué à une surface portante précédemment trempée (H1), et
- dans lequel la position du dispositif de soutien (9) est réglée en fonction de la déformation qui a été saisie pour la surface portante (H1) à laquelle le dispositif de soutien (9) est appliqué.

2. Procédé selon la revendication 1, **caractérisé en ce que** la taille et la position angulaire de la déformation sont saisies.

3. Procédé selon l'une quelconque des revendications 1 ou 2, **caractérisé en ce que**
- la déformation apparaissant lors de la trempe des surfaces portantes respectives est saisie au niveau d'un modèle d'arbre ou d'un modèle d'axe et
- au cours de la trempe des arbres ou des axes ensuite traités, la position du dispositif de soutien (9), qui est appliqué à une surface portante (H1) respective précédemment trempée des arbres ou des axes traités, est réglée en fonction de la déformation, laquelle a été déterminée au niveau du modèle d'arbre pour la surface portante correspondante respective..

4. Procédé selon l'une quelconque des revendications 1 ou 2, **caractérisé en ce que**
- la déformation apparaissant respectivement au cours de la trempe d'une surface portante (H1) est déterminée,
- le dispositif de soutien est appliqué à une surface portante trempée (H1) à la fin du processus de trempe de cette surface portante (H1) pour soutenir l'arbre ou l'axe (2) au cours du processus de trempe de la surface portante suivante (H3), et
- la position du dispositif de soutien est réglée en fonction de la déformation, laquelle a été déterminée pour le point d'appui trempé (H1).

5. Dispositif pour tremper les surfaces portantes (H1 à H4) des arbres ou axes rotatifs autour de leur axe longitudinal (L) pendant le processus de trempe, plus particulièrement des vilebrequins (2) ou des arbres à cames, comprenant un dispositif d'augmentation de la température et de trempe (3), comprenant un dispositif de soutien (9) pour supporter l'arbre ou l'axe (2) pendant le processus de trempe des surfaces portantes (H1 à H4) et avec un dispositif (6) pour déterminer la déformation de l'arbre ou de l'axe respectif,
**caractérisé en ce que**
- un dispositif de commande (7) est prévu avec une mémoire (8) pour enregistrer le résultat de la détermination de la déformation et
- le dispositif de soutien (9) comprend un dispositif de positionnement (10) relié au dispositif de commande (7), lequel modifie la position du dispositif de soutien (9) en fonction des valeurs mesurées enregistrées.

6. Dispositif selon la revendication 5, **caractérisé en ce que** le dispositif de saisie de la déformation est un dispositif de mesure automatique (6).

7. Dispositif selon la revendication 6, **caractérisé en ce que** le dispositif de mesure (6) est couplé au dispositif d'augmentation de la température et de trempe (3) et **en ce qu'**une modification de la course parcourue par le dispositif d'augmentation de la température et de trempe (3) lors d'une rotation du vilebrequin (2) est saisie comme mesure pour la déformation du vilebrequin (2).

8. Dispositif selon l'une quelconque des revendications 5 à 7, **caractérisé en ce que** le dispositif d'augmentation de la température et de trempe (3) comprend une unité d'augmentation de la température (5) fonctionnant de façon inductive.

9. Dispositif selon l'une quelconque des revendications 5 à 8, **caractérisé en ce que** le dispositif de positionnement (3) peut être déplacé d'au moins deux degrés de liberté.

10. Dispositif selon l'une quelconque des revendications 5 à 9, **caractérisé en ce que** le dispositif de positionnement (3) comprend un dispositif de génération de force (12) hydraulique, pneumatique ou électrique.

11. Dispositif selon la revendication 10, **caractérisé en ce que** le dispositif de génération de force est un vérin (12) activable de façon hydraulique ou pneumatique et **en ce qu'**un allongement du piston (13) du vérin (12) forme un support (14) sur lequel le vilebrequin (2) s'appuie.

12. Dispositif selon l'une quelconque des revendications 5 à 11, **caractérisé en ce que** le dispositif de soutien (9) présente une assise de rouleau pour le vilebrequin (2).

13. Dispositif selon la revendication 12, **caractérisé en ce que** l'assise de rouleau présente deux rouleaux (16, 17) dont les axes de rotation sont placés dans un seul plan.

14. Dispositif selon la revendication 13, **caractérisé en ce que** l'écart entre les rouleaux (16, 17) est inférieur au diamètre du vilebrequin (2) dans la zone de la surface portante à laquelle le dispositif de soutien (9) prend appui.

15. Dispositif selon l'une quelconque des revendications 12 à 14, **caractérisé en ce qu'**un troisième rouleau (24) est prévu, lequel est espacé des deux autres rouleaux (16, 17) et agit sur les surfaces portantes (H1 à H4).

16. Dispositif selon l'une quelconque des revendications 12 à 15, **caractérisé en ce qu'**au moins un des rouleaux (16, 17, 24) est placé de façon articulée et est couplé à un dispositif de positionnement (19) via lequel le rouleau articulé (24) peut être déplacé dans sa position de soutien.
